# EUROPEAN PATENT SPECIFICATION

(11) **EP 2 621 235 B1**
(45) Date of publication and mention of the grant of the patent: **02.05.2018**
(21) Application number: 12360006.6
(22) Date of filing: 27.01.2012
(51) Int. Cl.: H04W 72/04

(54) **Transmission regime control for common channels**
Übertragungsregimesteuerung für gemeinsame Kanäle
Contrôle de régime de transmission pour des canaux communs

(43) Date of publication of application: 31.07.2013
(73) Proprietor: Alcatel Lucent, 91620 Nozay (FR)
(72) Inventor: Wong, Shin Horng, Chippenham, Wiltshire SN15 3YB (GB); Dhingra, Vikas, Bangalore 560037, Karnataka (IN)
(74) Representative: Browne, Robin Forsythe

(56) References cited:
- US-A1- 2009 109 912
- US-A1- 2009 135 769
- ERICSSON ET AL: "Stand-alone HS-DPCCH without ongoing E-DCH transmission", 3GPP DRAFT; R1-113427 STAND-ALONE HS-DPCCH WITHOUT ONGOING E-DCH TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538471, [retrieved on 2011-10-04]
- ALCATEL-LUCENT ET AL: "Discussion on Standalone HS-DPCCH in CELL_FACH", 3GPP DRAFT; R1-114036 - REL-11 FE-FACH - STANDALONE HS-DPCCH IN CELL_FACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20111114 - 20111118, 8 November 2011 (2011-11-08), XP050562051, [retrieved on 2011-11-08]

## Description

### FIELD OF THE INVENTION

The present invention relates to a method of updating a user equipment common channel transmission regime in a wireless communications network, user equipment and a computer program product operable to perform that method; and a method of controlling user equipment common channel transmission regimes in a wireless communications network, a control node and computer program product operable to perform that method.

### BACKGROUND

Wireless telecommunications systems are known. In a cellular system radio coverage is provided to user equipment, for example, mobile telephones, in areas known as cells. A base station is located in each cell to provide radio coverage. User equipment in each cell receives information and data from a base station and transmits information and data to the base station.

Information and data transmitted by the base station to the user equipment occurs on channels of radio carriers known as downlink carriers. Information and data transmitted by user equipment to the base station occurs on uplink data channels or radio carriers known as uplink carriers.

The widespread popularity of smartphones has caused a significant change to data traffic profiles carried in known telecommunications networks. A data traffic profile of user equipment is becoming increasingly discontinuous or "bursty" and traditional transmission mode methods, designed primarily for continuous data transmission, may not aid overall efficient network operation or may be unsuitable for such a change to a typical data traffic profile. In particular, the common channels used for discontinuous or bursty data transmission are a limited network resource and their increased use may cause issues and inefficiencies within the wireless telecommunications network.

3GPP TSG RAN WGI Meeting #66bis, Rl-113427 (Ericsson, ST-Ericsson) describes possible downlink related improvements of resource utilisation, throughput, latency and coverage; in particular, standalone HS-DPCCH without ongoing E-DCH transmission. One proposal included describes use of an HS-SCCH order to trigger HS-DPCCH transmission, and preceding the triggered HS-DPCCH transmission with a PRACH preamble ramping procedure, thus achieving uplink time transmission with very short delay. The document suggests that in some circumstances an E-DCH transmission may be allowed if uplink data arrives in the UE buffer during an ongoing standalone HS-DPCCH transmission.
US2009/0135769 describes techniques for supporting operation with enhanced uplink in an inactive state. The enhanced uplink may allow user equipment to efficiently send a small amount of data in a cell_FACH state, which may avoid the need to transition to a cell_DCH state. The enhanced uplink may also allow user equipment to quickly transition from the Cell_FACH state to the Cell_DCH state.
Accordingly, it is desired to provide improved methods of operation for user equipment and base stations in a wireless telecommunications network.

### SUMMARY

The aforementioned objectives are accomplished by the subject matter of the independent claims. Further embodiments are specified by the dependent claims.

A first aspect provides a method of updating a user equipment common channel transmission regime in a wireless communication network, the method comprising: transmitting feedback information on a first common channel according to a first transmission regime;
determining that there is uplink data traffic to be transmitted on a common channel; transmitting an indication of characteristics of the uplink data traffic and awaiting information regarding an uplink data common channel transmission regime for the uplink data traffic;
updating the first transmission regime to match said uplink data common channel transmission regime; and
transmitting the uplink data traffic on said first common channel according to the uplink data common channel regime, and wherein said feedback information is transmitted with said uplink data traffic according to said uplink data common channel regime.

In order to operate efficiently, uplink and downlink transmissions require some level of feedback from the network nodes between which communication is taking place. High Speed Downlink Packet Access transmission (HSDPA downlink transmission) is supported on an uplink HS-DPCCH channel (High Speed Dedicated Physical Control Channel) on which feedback information such as channel quality indicators, acknowledgements and negative acknowledgements are provided to a base station. By having available feedback, the base station can choose an appropriate transport block size and is aware of whether or not a particular packet successfully reached user equipment. The feedback allows a network to operate more efficiently since a base station does not necessarily need to operate conservatively or blindly re-transmit HSDPA packets.

Downlink feedback information provided on an HS-DPCCH channel is largely independent of uplink data transmissions whilst in a non Cell_DCH state (for example, an uplink E-DCH transmission). Downlink feedback on HS-DPCCH channels may be triggered by a base station using an HS-SCCH order. Use of a specific control order, such as an HS-SCCH order, allows a base station to start receiving feedback from user equipment before any downlink packet transmissions are made and, thus, the base station can avoid the need to blindly re-transmit since there is no delay in obtaining feedback. However, such a feature requires that a base station is operable to send a control order prior to making any downlink transmissions on an HSDPA channel. Since data traffic on non-dedicated channels is typically bursty in nature and is usually unpredictable, in order for a base station to obtain the necessary feedback information for an HSDPA transmission it typically has to delay the making of any downlink transmission and instead trigger, via a control order, the initiation of HS-DPCCH feedback at the user equipment. Such a delay is undesirable and defeats the purpose of having an independent feedback transmission in many respects, since delay in network operation leads to overall inefficiency.

In some networks it is possible for feedback from user equipment to be discontinuously transmitted on an HS-DPCCH channel in relation to common channels, such that relevant information is always available to a base station. That is to say, user equipment may be operable to use a common channel to constantly send back feedback information so that downlink transmissions, when initiated, may be sent to user equipment efficiently. By using a discontinuous transmission regime, the feedback transmission from user equipment on an HS-DPCCH channel does not use excessive battery power. Common resources may be used to transmit the feedback information on an HS-DPCCH and those common resources may be time multiplexed such that transmission of feedback from user equipment does not hold up limited common resources. That is to say, one common resource may be time multiplexed for use by several user equipment feedback transmissions. Those feedback transmissions may occur in a discontinuous transmission regime.

However, if user equipment needs to make a data traffic transmission on a common channel it is necessary to move user equipment out of a discontinuous transmission mode. It may be difficult to move user equipment out of a discontinuous transmission mode in which it is already allocated a common channel and yet maintain necessary feedback information within the network and also allow the user equipment to make necessary data traffic transmissions on a common channel. It is possible for the user equipment to fully release a common channel on which it is performing discontinuous transmission, but synchronization will then be lost and any transmit power control will also then be lost. Furthermore, the base station loses information it may need in relation to downlink transmissions.

The first aspect address the need to have a mechanism to move user equipment out of one transmission regime, for example, a discontinuous transmission regime, on a common channel as a result of having a data traffic transmission uplink transmission of its own to make on an E-DCH or other common channel.

It will be appreciated that common channels in a network are contested whilst shared channels are usually resources which are shared and scheduled. Common channels, once acquired by user equipment, are typically not shared, and the resource is dedicated for that user equipment's use. In this case, common channels can be shared in a time multiplexed manner, but such an arrangement is atypical.

The first aspect recognises that by using a pre-estabtished link on a common or shared channel between user equipment and a control node, for example, a base station, and adapting that regime, it may be possible to bypass the need for common channel contention when there is uplink data to send, and a time and efficiency saving may result, since power control parameters and synchronisation may already be established between the two communicating network nodes

In one embodiment, the first transmission regime comprises a discontinuous transmission regime. In one embodiment, according to the first transmission regime, the user equipment transmits said feedback information in a predetermined periodically spaced transmission in a transmission burst of preselected radio frame length on a common channel. In one embodiment, according to the first transmission regime, the user equipment shares a common channel with other user equipment. Accordingly, a discontinuous feedback regime may be implemented on common channels which allows for efficient use of limited common resource. Transmission of User equipment of HS-DPCCH feedback on shared channels in a network in a discontinuous manner allows downlink transmissions to be made in an efficient manner.

The feedback information is transmitted with said uplink data traffic according to said uplink data common channel regime. Accordingly HS-DPCCH feedback is sent on the same common channel as any data traffic packets, for example, E-DCH packets, once the user equipment is transmitting according to the uplink data common channel regime. That is to say, the feedback can piggyback onto full data traffic transmissions.

In one embodiment, the indication of characteristics of the uplink data traffic comprises an indication of quantity of uplink data traffic to be transmitted. In one embodiment, the indication comprises a change to data packet coding and includes an indication of characteristics of the uplink data traffic. Accordingly, the user equipment may be operable to initially attempt transmission of uplink data traffic on a currently held common channel according to the first transmission regime. The uplink data traffic will typically be encoded in a different way to feedback information and that different encoding may itself indicate to a controlling node, for example, a base station, that the user equipment has a data traffic transmission to send to the network. The encoding of the data traffic may include scheduling information. That scheduling information may be used by a base station to determine characteristics of the data traffic at user equipment, including, for example, buffer size and nature of data traffic.

In one embodiment, the common channel used in the first transmission regime is reused in the uplink data common channel regime. In one embodiment, it may be determined that no change to transmission parameters at the user equipment between the first transmission regime and the uplink data common channel transmission regime is required.

In one embodiment, the information regarding an uplink data common channel transmission regime comprises an indication of a change to a predetermined period of periodically spaced transmissions. Accordingly, the repetition period may be shortened or lengthened, thus allowing a greater (or lesser) number of packets to be transmitted in a given time period.

In one embodiment, the information regarding an uplink data common channel transmission regime comprises an indication of a change to a preselected radio frame length of a transmission burst. Accordingly, the length of transmission burst may be lengthened or shortened, thus allowing a greater (or lesser) sized packet to be transmitted in a given time period.

In one embodiment, the information regarding an uplink data common channel transmission regime comprises an indication to transmit continuously on a common channel. Accordingly, the user equipment may be allocated sole use of a common channel. That sole use may comprise continuous transmission on that common channel.

In one embodiment, the information regarding an uplink data common channel transmission regime for the uplink data traffic comprises an HS-SCCH order. Accordingly, a control node may be operable to use layer one signalling to instruct a change to a user equipment transmission regime.

In one embodiment, user equipment maintains transmit power control according to the first transmission regime until synchronisation with the uplink data common channel regime is achieved. Accordingly, power control at user equipment for uplink transmissions is maintained and battery power is not used unnecessarily.

In one embodiment, the information regarding the uplink data common channel transmission regime for the uplink data traffic comprises an indication of a commencement time for user equipment to begin transmitting according to the uplink data common channel regime. Accordingly, the user equipment maintains synchronisation with the base station whilst it attempts to establish synchronisation on a new common channel, and thus power control may be maintained throughout the transfer from one common channel to another, since the user equipment has access to necessary information throughout the process.

A second aspect provides a computer program product operable, when executed on a computer, to perform the method of the first aspect.

A third aspect provides user equipment operable to update a common channel transmission regime in a wireless communications network, the user equipment comprising:
feedback transmission logic operable to transmit feedback information on a first common channel according to a first transmission regime;
data traffic logic operable to determine that there is uplink data traffic to be transmitted on a common channel;
indication transmission logic operable to transmit an indication of characteristics of the uplink data traffic and await information regarding an uplink data common channel transmission regime for the uplink data traffic;
regime update logic operable to update the first transmission regime to match the uplink data common channel transmission regime; and
data traffic transmission logic operable to transmit the uplink data traffic on said first common channel according to the uplink data common channel regime, and wherein said feedback information is transmitted with said uplink data traffic according to said uplink data common channel regime.

In one embodiment, the feedback transmission logic is operable to transmit feedback information according to a first transmission regime which comprises a discontinuous transmission regime.

In one embodiment, the feedback transmission logic is operable to transmit feedback information according to a first transmission regime, in a predetermined periodically spaced transmission in a transmission burst of preselected radio frame length on a common channel.

In one embodiment, the user equipment shares a common channel with other user equipment.

The data traffic transmission logic is also operable to transmit feedback information with the uplink data traffic according to the uplink data common channel regime.

In one embodiment, the indication of characteristics of the uplink data traffic comprises an indication of quantity of uplink data traffic to be transmitted.

In one embodiment, the indication comprises a change to data packet coding and includes an indication of characteristics of the uplink data traffic.

In one embodiment, the information regarding an uplink data common channel transmission regime comprises an indication of a change to a predetermined period of periodically spaced transmissions.

In one embodiment, the information regarding an uplink data common channel transmission regime comprises an indication of a change to a preselected radio frame length of a transmission burst.

In one embodiment, the information regarding an uplink data common channel transmission regime comprises an indication to transmit continuously on a common channel.

In one embodiment, the information regarding an uplink data common channel transmission regime for said uplink data traffic comprises an HS-SCCH order.

In one embodiment, the user equipment is operable to maintain transmit power control according to the first transmission regime until synchronisation with the uplink data common channel regime is achieved.

In one embodiment, the information regarding the uplink data common channel transmission regime for said uplink data traffic comprises an indication of a commencement time for user equipment to begin transmitting according to the uplink data common channel regime.

A fourth aspect provides a method of instructing an update to a user equipment common channel transmission regime in a wireless communication network, the method comprising:
determining parameters of a first transmission regime according to which the user equipment is transmitting feedback information on a first common channel;
receiving an indication that the user equipment has uplink data traffic to transmit and an indication of characteristics of the uplink data traffic;
assessing the characteristics of the uplink data traffic and determining parameters of an uplink data common channel transmission regime for the uplink data traffic on said first common channel;
instructing the user equipment to update the first transmission regime parameters to match the uplink data common channel transmission regime parameters, and wherein said feedback information is transmitted with said uplink data traffic according to said uplink data common channel regime.

In one embodiment, the assessing comprises determining whether the uplink data traffic may be successfully transmitted without a change to the first transmission regime.

In one embodiment, the assessing comprises determining whether time frames on a time multiplexed common channel are available and allocating the user equipment at least one time slot on a time multiplexed common channel on which to transmit the uplink data traffic.

A fifth aspect provides a computer program product operable, when executed on a computer, to perform the method of the fourth aspect.

A sixth aspect provides a control node in a wireless communication network operable to instruct an update to a user equipment common channel transmission regime, the control node comprising:
regime determination logic operable to determine parameters of a first transmission regime according to which the user equipment is transmitting feedback information on a first common channel;
indication reception logic operable to receive an indication that the user equipment has uplink data traffic to transmit and an indication of characteristics of the uplink data traffic;
common channel assessment logic operable to assess the characteristics of the uplink data traffic and determine parameters of an uplink data common channel transmission regime for the uplink data traffic on said first common channel;
instruction logic operable to instruct the user equipment to update the first transmission regime parameters to match the determined uplink data common channel transmission regime parameters, and wherein said feedback information is transmitted with said uplink data traffic according to said uplink data common channel regime.

In one embodiment, the common channel assessment logic is operable to determine whether the uplink data traffic may be successfully transmitted without a change to the first transmission regime.

In one embodiment, the common channel assessment logic is operable to determine which common channels are available and allocate the user equipment a different shared channel on which to transmit the uplink data traffic.

In one embodiment, the common channel assessment logic is operable to determine whether time frames on a time multiplexed common channel are available and allocate user equipment at least one time slot on a time multiplexed common channel on which to transmit the uplink data traffic.

Features and embodiments described in relation to one aspect may be incorporated into other aspects as appropriate.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments will now be described further with reference to the accompanying drawings, in which:
Figure 1 illustrates the main components of a telecommunications network according to one embodiment;
Figure 2 illustrates schematically the main method steps according to one embodiment; and
Figures 3 to 5 illustrate schematically user equipment signalling allocations on common channels according to embodiments.

### DESCRIPTION OF EMBODIMENTS:

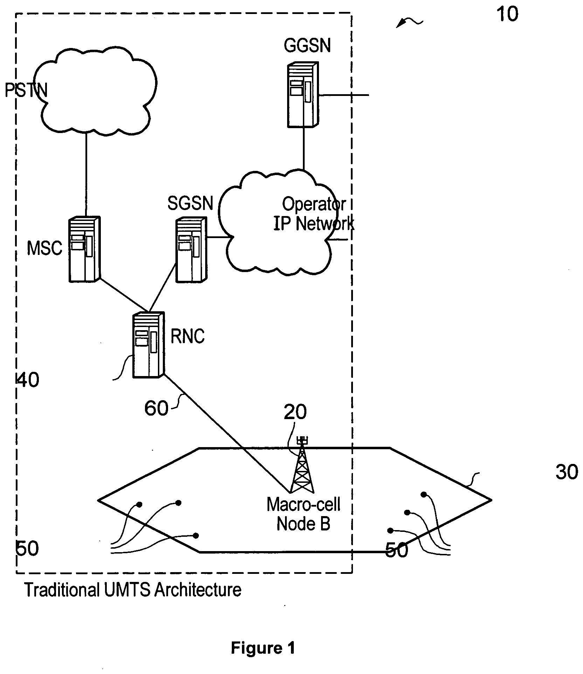

Figure 1 illustrates schematically the main components of a wireless telecommunications system 10 according to one embodiment. User equipment 50 roam through the wireless communications system. Base stations 20 are provided which support areas of radio coverage 30. A number of such base stations 20 are provided and are distributed geographically in order to provide a wide area of coverage to user equipment 50.

When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station 20 and thus effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

User equipment may operate in various modes in, for example, a UMTS telecommunications network. On initial turning on of user equipment in the cell, it will typically operate in "idle mode". Once it synchronises and attaches itself to a base station, it gains radio resource control (RRC) connection and is referred to as being in connected mode. User equipment in idle mode does not have a radio resource control connection. If user equipment is RRC connected it can be in one of five different RRC states: Cell_DCH, Cell_FACH, enhanced Cell_FACH, Cell_PCH, or URA_PCH states.

User equipment typically moves into Cell_DCH state when its data traffic is high. In a Cell_DCH state, the user equipment is allocated a dedicated channel on which to transmit and receive data from a base station. In a network operating according to typical UMTS architecture, user equipment can be in a Cell_DCH state when it is expected to have a high volume of traffic. Operation in a Cell_DCH state is typically highly demanding of battery power. User equipment may be operable, when not in a Cell_DCH state, to use common channels such as the Random Access Channel (RACH) or E-DCH channels which are available to user equipment when operating in a Cell_FACH state. Those common channels have a small data carrying ability and in WCDMA or UMTS systems it is possible for user equipment and base stations to operate and communicate data traffic therebetween using common resources on the uplink whilst user equipment is operating in a non Cell_DCH state.

In order to operate efficiently, uplink and downlink transmissions require some level of feedback from the network nodes between which communication is taking place. High Speed Downlink Packet Access transmission (HSDPA downlink transmission) is supported on an uplink HS-DPCCH channel (High Speed Dedicated Physical Control Channel) on which feedback information such as channel quality indicators, acknowledgements and negative acknowledgements are provided to a base station. By having available feedback, the base station can choose an appropriate transport block size and is aware of whether or not a particular packet successfully reached user equipment. The feedback allows a network to operate more efficiently since a base station does not necessarily need to operate conservatively or blindly re-transmit HSDPA packets.

Downlink feedback information provided on an HS-DPCCH channel is largely independent of uplink data transmissions whilst in a non Cell_DCH state (for example, an uplink E-DCH transmission). Downlink feedback on HS-DPCCH channels may be triggered by a base station using an HS-SCCH order. Use of a specific control order, such as an HS-SCCH order, allows a base station to start receiving feedback from user equipment before any downlink packet transmissions are made and, thus, the base station can avoid the need to blindly re-transmit since there is no delay in obtaining feedback. However, such a feature requires that a base station is operable to send a control order prior to making any downlink transmissions on an HSDPA channel. Since data traffic on non-dedicated channels is typically bursty in nature and is usually unpredictable, in order for a base station to obtain the necessary feedback information for an HSDPA transmission it typically has to delay the making of any downlink transmission and instead trigger, via a control order, the initiation of HS-DPCCH feedback at the user equipment. Such a delay is undesirable and defeats the purpose of having an independent feedback transmission in many respects, since delay in network operation leads to overall inefficiency.

In some networks it is possible for feedback from user equipment to be discontinuously transmitted on an HS-DPCCH channel in relation to common channels, such that relevant information is always available to a base station. That is to say, user equipment may be operable to use a common channel to constantly send back feedback information so that downlink transmissions, when initiated, may be sent to user equipment efficiently. By using a discontinuous transmission regime, the feedback transmission from user equipment on an HS-DPCCH channel does not excessive battery power. Common resources may be used to transmit the feedback information on an HS-DPCCH and those common resources may be time multiplexed such that transmission of feedback from user equipment does not hold up limited common resources. That is to say, one common resource may be time multiplexed for use by several user equipment feedback transmissions. Those feedback transmissions may occur in a discontinuous transmission regime.

However, if user equipment needs to make a data traffic transmission on a common channel it is necessary to move user equipment out of a discontinuous transmission mode. It may be difficult to move user equipment out of a discontinuous transmission mode in which it is already allocated a common channel and yet maintain necessary feedback information within the network and also allow the user equipment to make necessary data traffic transmissions on a common channel. It is possible for the user equipment to fully release a common channel on which it is performing discontinuous transmission, but synchronization will then be lost and any transmit power control will also then be lost. Furthermore, the base station loses information it may need in relation to downlink transmissions.

Aspects described herein address the need to have a mechanism to move user equipment out of a discontinuous transmission regime on a common channel as a result of having a data traffic transmission uplink transmission of its own to make on an E-DCH or other shared channel.

Before describing embodiments in any more detail, a brief overview will now be provided. Aspects allow a base station to assign a different common resource to user equipment that wishes to send the data traffic transmission on an E-DCH if that user equipment has been discontinuously transmitting feedback information on an HS-DPCCH channel of a common resource. On receipt of an E-DCH message, a base station is operable to decide whether.that user equipment remains in a discontinuous transmission mode and therefore transmits its data traffic in a discontinuous manner, or whether to move that user equipment out of a discontinuous transmission regime and whether to assign a different common resource to that user equipment.

The decision regarding how to allocate common resource to a given user equipment may be based on various predetermined criteria, for example, if the user equipment buffer size which may be obtained from scheduling information sent by user equipment is determined to have exceeded a given threshold, a base station may instruct that user equipment to exit a discontinuous transmission regime.

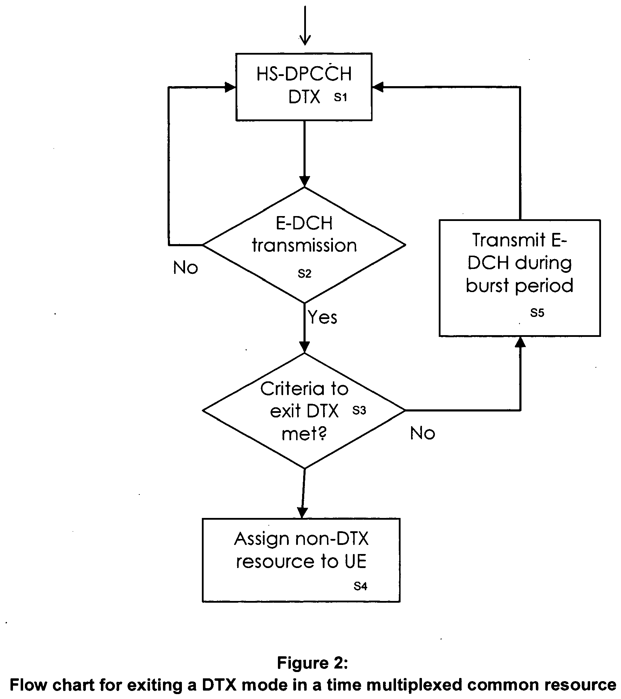

Figure 2 illustrates schematically the main method steps according to one embodiment. At step S1, user equipment is operable to perform discontinuous feedback to a base station on an HS-DPCCH. At step S2, user equipment determines that it has a data transmission to make on an E-DCH and it indicates to a base station, by sending an E-DCH coded message, that it has such a transmission to make. That indication to a base station includes information relating to the nature of the data traffic to be sent to the base station. At step S3, the base station determines whether criteria to exit discontinuous transmission are met by that user equipment and, in particular, the data traffic which that user equipment wishes to send to the network. If the criteria to exit discontinuous transmission are met, the base station assigns a non-discontinuous transmission common resource to that user equipment for transmission of its data traffic. That assignment is indicated as step S4 in Figure 2. If the base station determines at step S3 that the criteria to exit discontinuous transmission are not met then the user equipment may be operable, at step S5, to transmit the uplink data traffic transmissions to the base station on an E-DCH on the already acquired common channel using the burst period already allocated to that user equipment. After making the data transmission the user equipment may return to discontinuous transmission of feedback information at step S1.

According to some embodiments, the instruction from a base station to the user equipment to exit discontinuous transmission may be implemented using an HS-SCCH order. According to some embodiments, that order may also contain a signature or index which identifies the common resource that the user equipment should use once it has exited its discontinuous transmission regime. Typically, since the user equipment may already be being power controlled by a base station as a result of its discontinuous transmission regime, the user equipment is operable to bypass a usual preamble stage and move directly to transmission on a common resource indicated in an instruction from a base station. Once the user equipment has begun transmitting according to its new resource allocation, it is operable to transmit both its data transmission on an E-DCH and also feedback information on HS-DPCCH without the need for a discontinuous transmission regime. That is to say, in some embodiments the user equipment moves directly to a continuous transmission regime, albeit on a common channel.

If the base station allocates a different common resource to user equipment to the common resource currently being used by user equipment to make discontinuous feedback transmissions, according to some embodiments the user equipment is operable to use a different fractional dedicated physical channel to implement its transmit power control. That different F-DPCH will typically have a different time offset to that of the channel on which it may be discontinuously transmitting feedback information. Accordingly, it will be appreciated that user equipment will need to synchronize with such a new time offset. In some embodiments, the base station is operable to transmit a fractional dedicated physical channel for the redirected common resource, as indicated by an HS-SCCH order, immediately after sending such an order. As a result, the user equipment does not immediately move to the new common resource but attempts to synchronize with the new F-DPCH from the base station. Once synchronization is achieved, the user equipment is operable to begin transmission using the new common resource. A predetermined time may be specified for the user equipment to sync with the new F-DPCH, after which the user equipment and base station expect use of the newly allocated common resource. Such a predetermined synchronization time would typically be expected to be less than that required for initial access; that is to say, for user equipment to perform a preamble procedure had it been released from the common resource on which it was performing discontinuous transmission prior to the requirement to send uplink data traffic on a common channel.

According to some embodiments, during synchronization time with the newly allocated common channel resource it is possible for the user equipment to continue transmitting using the old common resource in a discontinuous transmit manner and to use the off period of the discontinuous transmission to try to sync with the new F-DPCH. In such a case, user equipment may still transmit on an E-DCH channel whilst synchronising, rather than releasing resource completely.

According to some embodiments, the resource index indicated in the instruction from base station to user equipment may point to the same resource that the user equipment is using for discontinuous feedback transmissions. It will be appreciated that there is no need to move user equipment from a common channel if there are no other user equipment being time multiplexed onto that common resource at the time the user equipment requires a common resource to make data traffic transmissions. In such a case there is no need to perform further synchronization of an F-DPCH and the user equipment maintains transmit power control.

According to some embodiments, the order sent by a base station to user equipment may indicate that an increase in a burst period of a discontinuous transmission regime will be sufficient for the user equipment to successfully make data traffic transmissions. It will be appreciated that an increase to the transmission time at user equipment in a discontinuous transmission regime may mean that the user equipment is not required to exit from a discontinuous transmission regime. Such a method may be used if a user equipment buffer is not large and simply requires a longer burst period in the discontinuous regime to handle its data traffic. The instruction from a base station to user equipment may also move the user equipment to another time multiplexed common resource; for example, one which already has a longer burst period.

In some embodiments, the instruction from base station to user equipment may be operable to reduce a discontinuous transmission cycle period. By reducing the cycle period of a discontinuous transmission regime, more transmission opportunities are afforded to the user equipment to transmit E-DCH packets containing data traffic. Similarly, the instruction from a base station to user equipment may instruct user equipment to reduce the discontinuous transmit cycle on a currently held common resource, or may direct user equipment to another common resource that is already operating according to a shorter discontinuous transmission cycle period.

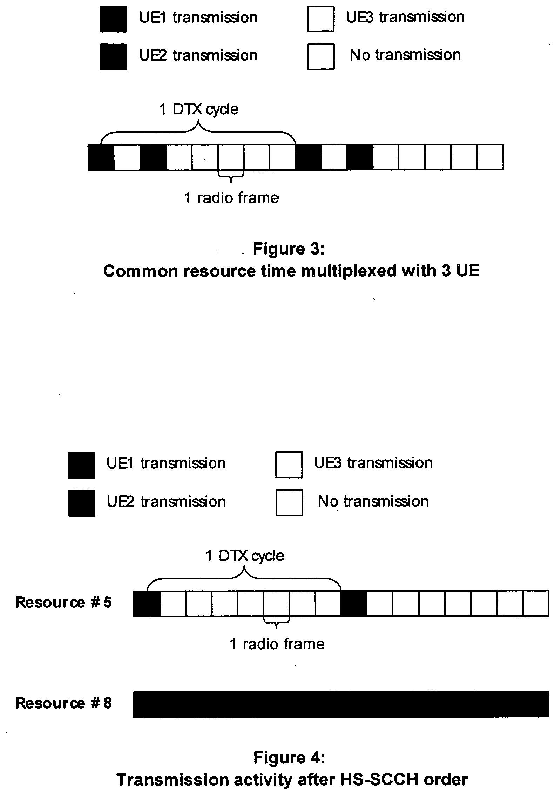

Figures 3 to 5 illustrate schematically user equipment signalling allocations on common channels according to embodiments. As illustrated schematically in Figure 3, three user equipment UE1, UE2, UE3 are operable to use the same common resource in a time multiplexed manner. In the illustrated example it is assumed that each burst period is one radio frame and that the discontinuous transmission cycle in operation by those three user equipment last the duration of eight radio frames. In the event that UE1 has data traffic in the form of E-DCH packets to transmit, it is operable to transmit them initially according to its allocated discontinuous transmission regime. That is to say, it is operable to transmit E-DCH packets during its burst period wake-up time. During that wake-up time the user equipment is also operable to send scheduling information relating to the nature of the data traffic which it has to transmit to the base station.

From that scheduling information a base station is operable to decide that user equipment buffer at UE1 is not particularly significant and thus there is no need for that user equipment to exit its existing discontinuous transmission regime. Furthermore, it may be operable to determine that there is no need to alter the parameters of the existing discontinuous transmission regime. As a result, the base station need not send any specific instruction or order to user equipment 1 and UE1 continues to transmit its remaining E-DCH packets according to its known discontinuous transmission regime.

Figure 4 illustrates schematically user equipment signalling allocation on common channels according to another embodiment. As described previously in relation to Figure 3, three user equipment are initially operable to share the same common resource. That common resource is indexed as resource number 5 and is shared by those user equipment in a time multiplexed manner. In this illustrated example, user equipment 2 has data traffic sent to the network and thus has E-DCH packets to transmit to a base station. Initially, it sends them in a discontinuous transmission manner according to its existing discontinuous transmission cycle. In this case, that discontinuous transmission cycle is that shown previously in Figure 3 (that is to say, one radio frame burst period across in an eight radio frame discontinuous transmission cycle. The user equipment 2 (UE2) is also operable to send its scheduling information to a base station.

At the base station the base station decides, on the basis of received scheduling information, that the UE2 buffer is significant and that the user equipment must exit discontinuous transmission in order to transmit its data traffic in E-DCH packets. As a result, the base station is operable to send an order, in the form of an HS-SCCH order, to user equipment 2. That order instructs the user equipment to exit discontinuous transmission and to continuously transmit using common resource having an index number 8.

As a result of reception of that order, UE2 is operable to exit discontinuous transmission and stops using common resource number 5. It immediately begins transmitting using common resource index 8. User equipment 2 is operable to send an ACK to the base station using common resource having index number 8. The transmission activities are illustrated schematically in Figure 4 and it can be seen that resource index 8 is not time multiplexed.

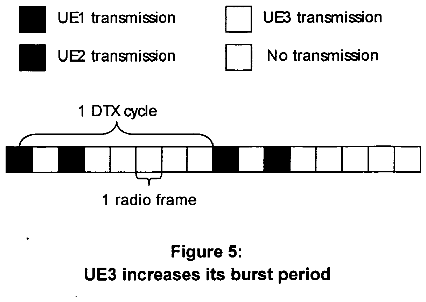

Figure 5 illustrates schematically user equipment signalling allocations on common channels according to one embodiment.

In accordance with the previous examples, in this example three user equipment share a common resource having index number 5 in a time multiplexed manner. In this illustrated example, user equipment 3 (UE3) determines it has data traffic to transmit and makes an E-DCH transmission sending initial E-DCH packets in a discontinuous transmit manner. UE3 also sends scheduling information to the base station. From that scheduling information, in this case the base station is operable to decide that the user equipment 3 buffer is not significant enough to warrant completely exiting a discontinuous transmission regime, but that the user equipment 3 requires a longer burst period to serve its data traffic using E-DCH coded data packets. As a result, the base station is operable to send an order, for example, an HS-SCCH order, including the following instructions: use common resource index number 5 (that is to say, the same resource as is currently being used by user equipment 3); user burst period of two radio frames; and use a discontinuous transmission cycle of eight radio frames.

As a result of reception of such an order, the user equipment UE3 does not exit discontinuous transmission but is now operable to use two radio frames for transmission every eight radio frames.

It will be appreciated that aspects described herein allow control of E-DCH transmissions over a time multiplexed common resource. Implementation of independent downlink feedback may thus be implemented using a discontinuous transmission regime, thereby conserving battery power and allowing use of common resource in a more efficient manner.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of updating a user equipment (50) common channel transmission regime in a wireless communication network (10), said method comprising the following steps performed by the user equipment:
transmitting feedback information on a first common channel according to a first transmission regime;
determining that there is uplink data traffic to be transmitted on a common channel;
transmitting an indication of characteristics of said uplink data traffic and awaiting information regarding an uplink data common channel transmission regime for said uplink data traffic;
updating said first transmission regime to match said uplink data common channel transmission regime; and
transmitting said uplink data traffic on said first common channel according to said uplink data common channel regime, and wherein said feedback information is transmitted with said uplink data traffic according to said uplink data common channel regime.

2. A method according to claim 1, wherein said first transmission regime comprises a discontinuous transmission regime.

3. A method according to any preceding claim, wherein said information regarding an uplink data common channel transmission regime comprises an indication of a change to a predetermined period of periodically spaced transmissions.

4. A method according to any preceding claim, wherein said information regarding an uplink data common channel transmission regime comprises an indication of a change to a preselected radio frame length of a transmission burst.

5. A method according to any preceding claim, wherein said information regarding an uplink data common channel transmission regime comprises an indication to transmit continuously on a common channel.

6. A method according to any preceding claim, wherein said information regarding an uplink data common channel transmission regime for said uplink data traffic comprises an HS-SCCH order, wherein said feedback information comprises HS-DPCCH feedback and said uplink data traffic comprises E-DCH packets.

7. A method according to any preceding claim, wherein said user equipment (50) maintains transmit power control according to said first transmission regime until synchronisation with said uplink data common channel regime is achieved.

8. A method according to any preceding claim, wherein said information regarding said uplink data common channel transmission regime for said uplink data traffic comprises an indication of a commencement time for user equipment to begin transmitting according to said uplink data common channel regime.

9. A computer program product operable, when executed on a computer, to perform the method of any one of claims 1 to 8.

10. User equipment (50) operable to update a common channel transmission regime in a wireless communications network (10), said user equipment (50) comprising:
feedback transmission logic operable to transmit feedback information on a first common channel according to a first transmission regime;
data traffic logic operable to determine that there is uplink data traffic to be transmitted on a common channel;
indication transmission logic operable to transmit an indication of characteristics of said uplink data traffic and await information regarding an uplink data common channel transmission regime for said uplink data traffic;
regime update logic operable to update said first transmission regime to match said uplink data common channel transmission regime; and
data traffic transmission logic operable to transmit said uplink data traffic on said first common channel according to said uplink data common channel regime, and
wherein said feedback information is transmitted with said uplink data traffic according to said uplink data common channel regime.

11. A method of instructing an update to a user equipment (50) common channel transmission regime in a wireless communication network (10) comprising a control node (20;40), said method comprising the following steps performed by the control node:
determining parameters of a first transmission regime according to which said user equipment (50) is transmitting feedback information on a first common channel;
receiving an indication that said user equipment (50) has uplink data traffic to transmit and an indication of characteristics of said uplink data traffic;
assessing the characteristics of said uplink data traffic and determining parameters of an uplink data common channel transmission regime for said uplink data traffic on said first common channel;
instructing said user equipment (50) to update said first transmission regime parameters to match said uplink data common channel transmission regime parameters, and
wherein said feedback information is transmitted with said uplink data traffic according to said uplink data common channel regime.

12. A computer program product operable, when executed on a computer, to perform the method of claim 11.

13. A control node (20; 40) in a wireless communication network (10) operable to instruct an update to a user equipment (50) common channel transmission regime, said control node (20; 40) comprising:
regime determination logic operable to determine parameters of a first transmission regime according to which said user equipment (50) is transmitting feedback information on a first common channel;
indication reception logic operable to receive an indication that said user equipment (50) has uplink data traffic to transmit and an indication of characteristics of said uplink data traffic;
common channel assessment logic operable to assess the characteristics of said uplink data traffic and determine parameters of an uplink data common channel transmission regime for said uplink data traffic on said first common channel;
instruction logic operable to instruct said user equipment to update said first transmission regime parameters to match said determined uplink data common channel transmission regime parameters, and wherein said feedback information is transmitted with said uplink data traffic according to said uplink data common channel regime.

## Patentansprüche

1. Verfahren zum Aktualisieren einer Benutzereinrichtung (50) mit Gemeinschaftskanal-Übertragungsregime in einem drahtlosen Kommunikationsnetzwerk (10), wobei das Verfahren folgende Schritte umfasst, die mit der Benutzereinrichtung durchgeführt werden:
- Übertragen von Rückkopplungsinformation auf einem ersten Gemeinschaftskanal gemäß einem ersten Übertragungsregime;
- Bestimmen, dass Aufwärts-Datenverkehr auf einem Gemeinschaftskanal zu übertragen ist;
- Übertragen einer Anzeige von Eigenschaften des Aufwärts-Datenverkehrs und Abwarten von Information hinsichtlich eines Aufwärtsdaten-Gemeinschaftskanal-Übertragungsregimes für den Aufwärts-Datenverkehr;
- Aktualisieren des ersten Übertragungsregimes zum Anpassen des Aufwärtsdaten-Gemeinschaftskanal-Übertragungsregimes; und
- Übertragen des Aufwärts-Datenverkehrs auf dem ersten Gemeinschaftskanal in Abhängigkeit von dem Aufwärtsdaten-Gemeinschaftskanal-Regime, und wobei die Rückkopplungsinformation übertragen wird mit dem Aufwärts-Datenverkehr in Abhängigkeit von dem Aufwärtsdaten-Gemeinschaftskanal-Regime.

2. Verfahren nach Anspruch 1,
wobei das erste Übertragungsregime ein diskontinuierliches Übertragungsregime umfasst.

3. Verfahren nach einem der vorhergehenden Ansprüche,
wobei die Information hinsichtlich eines Aufwärtsdaten-Gemeinschaftskanal-Übertragungsregimes eine Anzeige über eine Änderung zu einer vorbestimmten Periode von periodisch beabstandeten Übertragungen aufweist.

4. Verfahren nach einem der vorhergehenden Ansprüche,
wobei die Information hinsichtlich eines Aufwärtsdaten-Gemeinschaftskanal-Übertragungsregimes eine Anzeige über eine Änderung zu einer vorgewählten Funkrahmenlänge eines Übertragungsblocks aufweist.

5. Verfahren nach einem der vorhergehenden Ansprüche,
wobei die Information hinsichtlich eines Aufwärtsdaten-Gemeinschaftskanal-Übertragungsregimes eine Anzeige zum kontinuierlichen Übertragen auf einem Gemeinschaftskanal aufweist.

6. Verfahren nach einem der vorhergehenden Ansprüche,
wobei die Information hinsichtlich eines Aufwärtsdaten-Gemeinschaftskanal-Übertragungsregimes für den Aufwärts-Datenverkehr einen HS-SCCH-Befehl aufweist, wobei die Rückkopplungsinformation eine HS-DPCCH-Rückkopplungsinformation aufweist und der Aufwärts-Datenverkehr E-DCH Pakete aufweist.

7. Verfahren nach einem der vorhergehenden Ansprüche,
wobei die Benutzereinrichtung (50) die Übertragung von einer Leistungssteuerung gemäß dem ersten Übertragungsregime beibehält, bis die Synchronisation mit dem Aufwärtsdaten-Gemeinschaftskanal-Regime erreicht ist.

8. Verfahren nach einem der vorhergehenden Ansprüche,
wobei die Information hinsichtlich des Aufwärtsdaten-Gemeinschaftskanal-Übertragungsregimes für den Aufwärts-Datenverkehr eine Anzeige über einen Anfangszeitpunkt für die Benutzereinrichtung aufweist, um die Übertragung gemäß dem Aufwärtsdaten-Gemeinschaftskanal-Regime zu beginnen.

9. Computerprogrammprodukt, das betreibbar ist, wenn es auf einem Computer abläuft, um das Verfahren nach einem der Ansprüche 1 bis 8 durchzuführen.

10. Benutzereinrichtung (50), die betreibbar ist um ein Gemeinschaftskanal-Übertragungsregime in einem drahtlosen Kommunikationsnetzwerk (10) zu aktualisieren, wobei die Benutzereinrichtung (50) folgendes aufweist:
- eine Rückkopplungsübertragung-Logik, die betreibbar ist, um Rückkopplungsinformation auf einem ersten Gemeinschaftskanal gemäß einem ersten Übertragungsregime zu übertragen;
- eine Datenverkehr-Logik, die betreibbar ist, um zu bestimmen, dass ein Aufwärts-Datenverkehr auf einem Gemeinschaftskanal zu übertragen ist;
- eine Anzeigeübertragungs-Logik, die betreibbar ist, um eine Anzeige von Eigenschaften des Aufwärts-Datenverkehrs zu übertragen und Information abzuwarten im Hinblick auf ein Aufwärtsdaten-Gemeinschaftskanal-Übertragungsregime für den Aufwärts-Datenverkehr;
- eine Regimeaktualisierungs-Logik, die betreibbar ist, um das erste Übertragungsregime zu aktualisieren, um eine Anpassung des Aufwärtsdaten-Gemeinschaftskanal-Übertragungsregimes durchzuführen; und
- eine Datenverkehrsübertragungs-Logik, die betreibbar ist, um den Aufwärts-Datenverkehr auf dem ersten Gemeinschaftskanal gemäß dem Aufwärtsdaten-Gemeinschaftskanal-Regime zu übertragen, und
wobei die Rückkopplungsinformation mit dem Aufwärts-Datenverkehr übertragen wird, und zwar gemäß dem Aufwärtsdaten-Gemeinschaftskanal-Regime.

11. Verfahren zum Anweisen einer Aktualisierung für eine Benutzereinrichtung (50) mit Gemeinschaftskanal-Übertragungsregime in einem drahtlosen Kommunikationsnetzwerk (10) das einen Steuerungsknoten (20; 40) aufweist, wobei das Verfahren die folgenden Schritte aufweist, die mit dem Steuerungsknotenpunkt durchgeführt werden:
- Bestimmen von Parametern eines ersten Übertragungsregimes gemäß welchem die Benutzereinrichtung (50) Rückkopplungsinformation auf einem ersten Gemeinschaftskanal überträgt;
- Empfangen einer Anzeige, dass die Benutzereinrichtung (50) einen Aufwärts-Datenverkehr zu übertragen hat, sowie einer Anzeige von Eigenschaften des Aufwärts-Datenverkehrs;
- Zugreifen auf Eigenschaften des Aufwärts-Datenverkehrs und Bestimmen von Parametern von einem Aufwärtsdaten-Gemeinschaftskanal-Übertragungsregime für den Aufwärts-Datenverkehr auf dem ersten Gemeinschaftskanal;
- Instruieren der Benutzereinrichtung (50), die Parameter des ersten Übertragungsregimes zu aktualisieren, um eine Anpassung der Aufwärtsdaten-Gemeinschaftskanal-Übertragungsregimeparameter durchzuführen, und
wobei die Rückkopplungsinformation mit dem Aufwärts-Datenverkehr gemäß dem Aufwärtsdaten-Gemeinschaftskanal-Regime übertragen wird.

12. Computerprogramprodukt, das betreibbar ist, wenn es auf einem Computer läuft, um das Verfahren gemäß Anspruch 11 durchzuführen.

13. Steuerungsknotenpunkt (20; 40) in einem drahtlosen Kommunikationsnetzwerk (10), das betreibbar ist, um eine Aktualisierung für eine Benutzereinrichtung (50) mit Gemeinschaftskanal-Übertragungsregime anzuweisen,
wobei der Steuerungsknotenpunkt (20; 40) Folgendes aufweist:
- eine Regimebestimmungs-Logik, die betreibbar ist, um Parameter eines ersten Übertragungsregimes zu bestimmen, gemäß welchem die Benutzereinrichtung (50) Rückkopplungsinformation auf einem ersten Gemeinschaftskanal überträgt;
- eine Anzeigeempfangs-Logik, die betreibbar ist, um eine Anzeige zu empfangen, dass die Benutzereinrichtung (50) Aufwärts-Datenverkehr zu übertragen hat, sowie einer Anzeige von Eigenschaften des Aufwärts-Datenverkehrs;
- eine Gemeinschaftskanalzugriffs-Logik, die betreibbar ist, um einen Zugriff auf die Eigenschaften des Aufwärts-Datenverkehrs vorzunehmen und Parameter eines Aufwärtsdaten-Gemeinschaftskanal-Übertragungsregimes für den Aufwärts-Datenverkehr auf dem ersten Gemeinschaftskanal zu bestimmen;
- eine Instruktions-Logik, die betreibbar ist, um die Benutzereinrichtung zu instruieren, die Parameter des ersten Übertragungsregimes zu aktualisieren, um eine Anpassung der bestimmten Aufwärtsdaten-Gemeinschaftskanal-Übertragungsregimeparameter durchzuführen, und
wobei die Rückkopplungsinformation mit dem Aufwärts-Datenverkehr gemäß dem Aufwärtsdaten-Gemeinschaftskanal-Regime übertragen wird.

## Revendications

1. Procédé de mise à jour d'un régime de transmission de canal commun d'un équipement utilisateur (50) dans un réseau de communication sans fil (10), ledit procédé comprenant les étapes suivantes effectuées par l'équipement utilisateur :
la transmission d'informations de retour sur un premier canal commun selon un premier régime de transmission ;
l'évaluation de l'existence de trafic de données de liaison montante devant être transmises sur un canal commun ;
la transmission d'une indication des caractéristiques dudit trafic de données de liaison montante et l'attente d'informations relatives à un régime de transmission de données de liaison montante de canal commun pour ledit trafic de données de liaison montante ;
la mise à jour dudit premier régime de transmission pour le faire correspondre au régime de transmission de données de liaison montante de canal commun ; et
la transmission dudit trafic de données de liaison montante sur ledit premier canal commun selon ledit régime de données de liaison montante de canal commun, et selon lequel lesdites informations de retour sont transmises avec ledit trafic de données de liaison montante selon ledit régime de données de liaison montante de canal commun.

2. Procédé selon la revendication 1, selon lequel ledit premier régime de transmission comprend un régime de transmission discontinu.

3. Procédé selon l'une quelconque des revendications précédentes, selon lequel lesdites informations relatives à un régime de transmission de données de liaison montante de canal commun comprennent une indication d'un changement d'une période prédéterminée de transmissions périodiques espacées dans le temps.

4. Procédé selon l'une quelconque des revendications précédentes, selon lequel lesdites informations relatives à un régime de transmission de données de liaison montante de canal commun comprennent une indication d'un changement d'une longueur de trame radio présélectionnée d'une impulsion de transmission.

5. Procédé selon l'une quelconque des revendications précédentes, selon lequel lesdites informations relatives à un régime de transmission de données de liaison montante de canal commun comprennent une indication de transmission en continu sur un canal commun.

6. Procédé selon l'une quelconque des revendications précédentes, selon lequel lesdites informations relatives à un régime de transmission de données de liaison montante de canal commun comprennent un ordre HS-SCCH, selon lequel lesdites informations de retour comprennent des retours HS-DPCCH et ledit trafic de données de liaison montante comprennent des paquets E-DCH.

7. Procédé selon l'une quelconque des revendications précédentes, selon lequel l'équipement utilisateur (50) maintient le contrôle de la puissance de transmission selon ledit premier régime de transmission jusqu'à ce que la synchronisation avec ledit régime de données de liaison montante de canal commun soit achevée.

8. Procédé selon l'une quelconque des revendications précédentes, selon lequel lesdites informations relatives à un régime de transmission de données de liaison montante de canal commun comprennent une indication d'un temps de commencement auquel l'équipement utilisateur (50) commence à transmettre selon ledit régime de données de liaison montante de canal commun.

9. Produit de programme d'ordinateur, opérable lors de son exécution dans un ordinateur, pour effectuer le procédé selon l'une quelconque des revendications 1 à 8.

10. Équipement utilisateur (50), opérable pour effectuer une mise à jour d'un régime de transmission à canal commun dans un réseau de communication sans fil (10), ledit équipement utilisateur (50) comprenant :
une structure logique de transmission de retour d'informations, opérable pour transmettre des informations de retour sur un premier canal commun selon un premier régime de transmission ;
une structure logique de trafic de données opérable pour évaluer l'existence de trafic de données de liaison montante devant être transmises sur un canal commun ;
une structure logique de transmission d'indications, opérable pour transmettre une indication des caractéristiques dudit trafic de données de liaison montante et pour attendre des informations relatives à un régime de transmission de données de liaison montante de canal commun pour ledit trafic de données de liaison montante ;
une structure logique de mise à jour de régime, opérable pour mettre à jour ledit premier régime de transmission afin de le faire correspondre audit régime de transmission de données de liaison montante de canal commun ; et
une structure logique de transmission de trafic de données, opérable pour transmettre ledit trafic de données de liaison montante sur ledit premier canal commun selon ledit régime de données de liaison montante de canal commun, et selon lequel lesdites informations de retour sont transmises avec ledit trafic de données de liaison montante selon ledit régime de données de liaison montante de canal commun.

11. Procédé de commande d'une mise à jour d'un régime de transmission de canal commun d'un équipement utilisateur (50) dans un réseau de communication sans fil (10) comprenant un noeud de contrôle (20, 40), ledit procédé comprenant les étapes suivantes exécutées par le noeud de contrôle :
l'évaluation des paramètres d'un premier régime de transmission selon lequel ledit équipement utilisateur (50) transmet des informations de retour sur un premier canal commun ;
la réception d'une indication que ledit équipement utilisateur (50) présente un trafic de données de liaison montante devant être transmis, et une indication des caractéristiques dudit trafic de données de liaison montante ;
l'évaluation des caractéristiques dudit trafic de données de liaison montante et l'évaluation des paramètres d'un régime de transmission de données de liaison montante de canal commun pour ledit trafic de données de liaison montante sur ledit premier canal commun ;
la commande audit équipement utilisateur (50) de mettre à jour les paramètres dudit premier régime de transmission afin de le faire correspondre auxdits paramètres de régime de transmission de données de liaison montante de canal commun, et selon lequel lesdites informations de retour sont transmises avec ledit trafic de données de liaison montante selon ledit régime de données de liaison montante de canal commun.

12. Produit de programme d'ordinateur, opérable, lors de son exécution dans un ordinateur, pour effectuer le procédé selon la revendication 11.

13. Noeud de contrôle (20, 40) dans un réseau de communication sans fil (10) opérable pour commander une mise à jour d'un régime de transmission de canal commun d'un équipement utilisateur (50), ledit noeud de contrôle (20, 40) comprenant :
une structure logique d'évaluation de régime, opérable pour évaluer des paramètres d'un premier régime de transmission selon lequel ledit équipement utilisateur (50) transmet des informations de retour sur un premier canal commun ;
une structure logique de réception d'indications, opérable pour recevoir une indication que ledit équipement utilisateur présente du trafic de données de liaison montante devant être transmis, et une indication des caractéristiques dudit trafic de données de liaison montante ;
une structure logique d'évaluation de canal commun, opérable pour évaluer les caractéristiques dudit trafic de données de liaison montante et pour évaluer les paramètres d'un régime de transmission de données de liaison montante de canal commun pour ledit trafic de données de liaison montante sur ledit premier canal commun ;
une structure logique de commande, opérable pour commander à l'équipement utilisateur à mettre à jour lesdits premiers paramètres de régime de transmission afin de les faire correspondre auxdits paramètres évalués de régime de transmission de données de liaison montante de canal commun, et selon lequel lesdites informations de retour sont transmises avec ledit trafic de données de liaison montante selon ledit régime de données de liaison montante de canal commun.
